# EUROPEAN PATENT APPLICATION

(11) **EP 4 559 806 A1**
(43) Date of publication of application: **28.05.2025**
(21) Application number: 23211830.7
(22) Date of filing: 23.11.2023
(51) Int. Cl.: B64C 13/40, B64F 5/40, B64F 5/60, F15B 19/00, B64F 1/00, F15B 21/044

(54) **HYDRAULIC SYSTEM FOR AN AIRCRAFT, HYDRAULIC ARRANGEMENT, AIRCRAFT, AIRCRAFT ARRANGEMENT, AND METHOD FOR TESTING SUCH HYDRAULIC SYSTEM**

(71) Applicant: Airbus Operations GmbH, 21129 Hamburg (DE)
(72) Inventor: Klose, Julian, 21129 Hamburg (DE); Hamm, Martin, 21129 Hamburg (DE); Gössing, Rolf, 21129 Hamburg (DE)
(74) Representative: KASTEL Patentanwälte PartG mbB

(57) **Abstract**

The invention provides a hydraulic system (14) for integrating in an aircraft (10) and for supplying hydraulic power to one or more hydraulic components (16) of the aircraft (10) by means of an operating fluid, the hydraulic system (14) comprising a system pumping device (26) for priming operating fluid from a system inlet (24) of the hydraulic system (14) and for pumping operating fluid thereinto.

## Description

The invention relates to a hydraulic system for integrating in an aircraft. The invention further relates to a hydraulic arrangement, an aircraft, an aircraft arrangement, and a method for testing such a hydraulic system.

Conventional on-ground maintenance concepts for hydraulic systems rely on the usage of airfield-based ground support equipment, such as hydraulic ground carts. Procurement, logistics, and usage of these ground carts are significant for airfield operators. Maintenance personnel usually need to serve the ground cart and intervene during certain maintenance procedures. During common maintenance with ground carts, the hydraulic pump and its control may be replaced. Different procedures are available to manually perform further maintenance tasks. However, if the ground cart is not available at the aircraft location, delays may be the result.

The object of the invention is to provide an improved or alternative method for testing or maintaining a hydraulic system for an aircraft.

To achieve this object, the invention provides a hydraulic system for integrating in an aircraft according to claim 1. A hydraulic arrangement, an aircraft, an aircraft arrangement, and a method for testing such a hydraulic system are subject-matter of the parallel claim.

Advantageous embodiments of the invention are subject-matter of the dependent claims.

In one aspect, the invention provides a hydraulic system for integrating in an aircraft and for supplying hydraulic power to one or more hydraulic components of the aircraft by means of an operating fluid, the hydraulic system comprising a system pumping device for priming operating fluid from a system inlet of the hydraulic system and for pumping operating fluid thereinto.

Preferably, the system pumping device is configured for priming and pumping operating fluid at a variable pressure and/or flow rate inside the hydraulic system.

Preferably, the hydraulic system further comprises a controlling means for controlling the pressure and/or flow rate inside the hydraulic system by means of the system pumping device in a test mode.

Preferably, the hydraulic system further comprises a system deaeration device for releasing gas from inside the hydraulic system.

Preferably, the hydraulic system further comprises a fluid filtering device for filtering operating fluid inside the hydraulic system.

Preferably, the hydraulic system is configured for pumping operating fluid to a system outlet of the hydraulic system and for discarding operating fluid therefrom.

In another aspect, the invention provides a hydraulic arrangement, comprising a hydraulic system according to any of the preceding embodiments and a hose for conducting operating fluid and for connecting to the system inlet and/or the system outlet of the hydraulic system.

Preferably, the hose includes a hose pumping device for pumping operating fluid to the system pumping device when the hose is connected to the system inlet.

Preferably, the hydraulic arrangement further comprises a mobile reservoir for operating fluid, the hose being configured for fluidly connecting the mobile reservoir with the system inlet and/or the system outlet of the hydraulic system.

In another aspect, the invention provides an aircraft, comprising an integrated hydraulic system according to any of the preceding embodiments.

In another aspect, the invention provides an aircraft arrangement, comprising a hydraulic arrangement according to any of the preceding embodiments and the aircraft, the hydraulic system of the hydraulic arrangement being integrated in the aircraft.

In another aspect, the invention provides a method for testing a hydraulic system integrated in an aircraft and for supplying hydraulic power to one or more hydraulic components of the aircraft by means of an operating fluid, the method comprising:
a) Providing a mobile reservoir containing operating fluid;
b) Fluidly connecting the mobile reservoir with a system inlet of the hydraulic system; and
c) By the hydraulic system, priming operating fluid from the system inlet of the hydraulic system and pumping operating fluid thereinto.

Some aspects of preferred embodiments of the invention may be summarized as follows:
An idea of preferred embodiments of the invention is to substitute hydraulic ground support equipment, such as hydraulic ground carts, on airfields, in the final assembly line (FAL), and/or in maintenance hangars. Preferred embodiments make use of an on-aircraft installed motor-pump unit and the respective control and monitoring. By this enhanced functionality of the aircraft hydraulic system, external means may not be needed and tasks are automated which may lead to a reduction of maintenance time and cost.

Preferred embodiments of the invention therefore provide a hydraulic system, a hydraulic equipment, software including monitoring/control and maintenance strategies that are designed and/or adjusted to perform on-ground maintenance. Preferred embodiments may also include the ability to control the hydraulic motor-pump-unit similarly to a ground cart, but from the aircraft. The operation preferably goes beyond current functionalities, applying pre-defined settings for scheduled maintenance and allowing a fully independent control.

Embodiments of the invention preferably have the following advantages and effects:
By introducing this ground cart functionality into the on-board hydraulic system, one, several, or all of the following advantages may be achieved:
1. significant cost reduction for the airfield maintenance operator (less personnel, procurement, logistics);
2. more flexibility for on-ground maintenance (ground cart availability not needed, maintenance can be performed in outstation);
3. no common failure on different aircraft due to contaminated ground cart;
4. more flexibility in case of alternative hydraulic fluid (fluid is dedicated then to aircraft only and not to common maintenance points (like ground cart);
5. increase of ground-handling safety (taking advantage of all control and monitoring means installed on aircraft);
6. reduction of failure probability (due to autonomous maintenance procedures);
7. more flexibility in case of alternative maintenance procedure (usage of hydraulic pump allows all functionalities from the operational cycle of the aircraft); and/or
8. no weight increase on aircraft: this may be advantageous for every operator, eliminating the need for hydraulic ground carts and therefore increasing the operability.

Embodiments of the invention are now explained in more detail with reference to the accompanying drawings of which
- Fig. 1: shows an embodiment of an aircraft and a mobile hydraulic power unit, the aircraft including a first embodiment of an integrated hydraulic system;
- Fig. 2: schematically shows a second embodiment of the integrated hydraulic system; and
- Fig. 3: shows an embodiment of an aircraft arrangement.

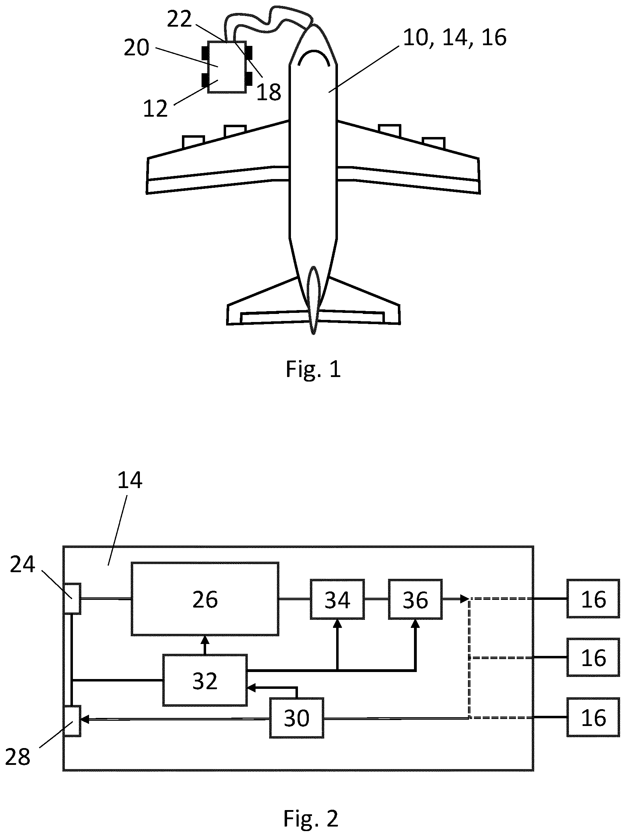

Fig. 1 shows an embodiment of an aircraft 10 and a mobile hydraulic power unit 12 that is external to the aircraft 10.

The aircraft 10 includes a first embodiment of an integrated hydraulic system 14 that is configured for operating a plurality of hydraulic components 16 of the aircraft 10 by means of an operating or hydraulic fluid. The operating fluid may, e.g., include water and/or oil.

The hydraulic power unit 12 includes a unit inlet 18, a unit reservoir 20 for operating fluid, and a unit outlet 22. The unit inlet 18 and the unit outlet 22 are respectively fluidly connected with the integrated hydraulic system 14 of the aircraft 10.

The hydraulic power unit 12 is configured for supplying hydraulic power to the plurality of hydraulic components 16. For this, the hydraulic power unit 12 includes a unit pumping device for pumping operating fluid from the unit outlet 22 into the hydraulic system 14. Additionally, the hydraulic power unit 12 may be configured for priming or sucking in operating fluid from the hydraulic system 14 via the unit inlet 18.

Fig. 2 schematically shows a second embodiment of the hydraulic system 14 for integrating in the aircraft 10.

The hydraulic system 14 is configured for supplying hydraulic power to the plurality of hydraulic components 16 of the aircraft 10 by means of the operating fluid.

The hydraulic system 14 includes a system inlet 24, a system pumping device 26, and a system outlet 28.

The system inlet 24 may include an opening and/or closing device for fluidly opening and/or closing the system inlet 24. Also, the system outlet 28 may include such opening and/or closing devices for opening and/or closing the system outlet 28.

The system pumping device 26 is configured for priming operating fluid from the system inlet 24 and for pumping operating fluid into the hydraulic system 14. Preferably, the system pumping device 26 is configured for priming and pumping operating fluid at variable pressure and/or flow rate inside the hydraulic system 14. Such pressure and/or flow rate may be in a range between 0 to 5000 psi or 0 to 60 gpm, respectively.

The hydraulic system 14 may further include a monitoring and/or sensing device 30 for monitoring and/or sensing the pressure and/or flow rate inside the hydraulic system 14.

The hydraulic system 14 may further include a system deaeration device 34. The system deaeration device 34 is configured for releasing gas or air from inside the hydraulic system 14. The system deaeration device 34 may, for example, include an air relief valve.

The hydraulic system 14 may further include a fluid filtering device 36. The fluid filtering device 36 is configured for filtering operating fluid inside the hydraulic system 14.

The hydraulic system 14 further includes a controlling means 32 for controlling the pressure and/or flow rate inside the hydraulic system 14 by means of the system pumping device 26. For this, the controlling means 32 may be data-connected with the monitoring and/or sensing device 30.

The controlling means 32 may further be configured for controlling the opening and/or closing device of the system inlet 24 or the system outlet 28, respectively. The controlling means 32 may further be configured for controlling the system deaeration device 34 and/or the fluid filtering device 36.

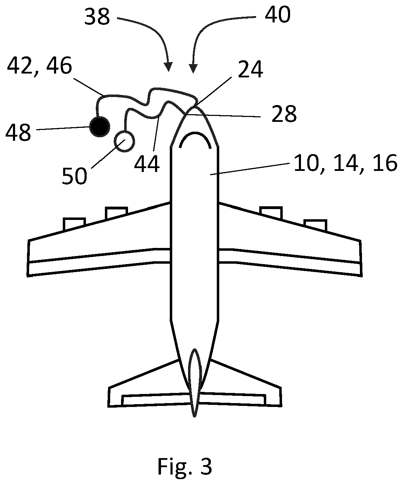

Fig. 3 shows an embodiment of an aircraft arrangement 38.

The aircraft arrangement 38 includes a hydraulic arrangement 40 and another embodiment of the aircraft 10.

The hydraulic arrangement 40 includes the hydraulic system 14 according to the second embodiment as shown in Fig. 2. The hydraulic system 14 is integrated in the aircraft 10.

The hydraulic arrangement 40 further includes a first hose 42 and a second hose 44 respectively for conducting operating fluid. The first hose 42 is connected to the system inlet 24, while the second hose 44 is connected to the system outlet 28. The first hose 42 includes a hose pumping device 46 for pumping operating fluid to the system pumping device 26.

The hydraulic arrangement 40 further includes a first mobile reservoir 48 and a second mobile reservoir 50 respectively for operating fluid. The first mobile reservoir 48 and/or the second mobile reservoir 50 may respectively be configured as a barrel or any kind of other suitable container. The first mobile reservoir 48 contains a suitable amount of operating fluid, while the second mobile reservoir 50 provides a suitable volume for operating fluid.

The first hose 42 and the second hose 44 respectively fluidly connect the first mobile reservoir 48 and the second mobile reservoir 50 with the system inlet 24 and the system outlet 28.

For the aircraft arrangement 38, the controlling means 32 may control the pressure and/or flow rate inside the hydraulic system 14 in a test or maintenance mode. The test mode is configured for testing or maintaining the hydraulic system 14 and/or the hydraulic components 16 of the aircraft 10. The test mode is to be performed when the aircraft 10 is on the ground.

In the test mode, the controlling means 32 may initiate one or more test processes by means of the system pumping device 26. The test processes may include one, several, or all of the following:
- varying the pressure and/or the flow rate inside the hydraulic system 14;
- priming operating fluid from the system inlet 24;
- pumping operating fluid into the hydraulic system 14;
- pumping operating fluid to the system outlet 28;
- discarding operating fluid from the hydraulic system 14;
- opening and/or closing the system inlet 24 and/or the system outlet 28;
- de-airing the hydraulic system 14; and/or
- filtering operating fluid inside the hydraulic system 14.

One, several, or all of the test processes may be performed sequentially or simultaneously and/or automatically.

The priming operating fluid from the system inlet 24 is performed by conducting operating fluid from the first mobile reservoir 48 via the first hose 42 to the system inlet 24. It is performed by the hose pumping device 46 and the system pumping device 26. Additionally, it may be supported by gravity and/or the principle of communicating vessels. Alternatively, the hose pumping device 46 in the first hose 42 may be omitted and the system pumping device 26 may prime operating fluid from the first mobile reservoir 48 alone and/or supported by gravity and/or the principle of communicating vessels.

The discarding of operating fluid from hydraulic system 14 is performed by conducting operating fluid from the system outlet 28 via the second hose 44 to the second mobile reservoir 50. It may be performed only by gravity and/or the principle of communicating vessels. Additionally, the discarding of operating fluid from the hydraulic system 14 may be supported by means of the system pumping device 26.

The priming operating fluid and the discarding of operating fluid may be performed simultaneously and/or automatically. In this case, the operating fluid in the hydraulic system 14 may be exchanged. Also, the priming operating fluid and/or the discarding of operating fluid may be accompanied simultaneously and/or automatically with the de-airing of the hydraulic system 14 and/or the filtering of operating fluid inside the hydraulic system 14.

The invention, however, also comprises embodiments of the aircraft arrangement 38 with a single hose 42, 44 and/or a single mobile reservoir 48, 50.

In a first case, operating fluid may be primed from the system inlet 24 by conducting operating fluid from the mobile reservoir 48, 50 via the first hose 42 to the system inlet 24. Simultaneously and/or automatically, operating fluid may be discarded from hydraulic system 14 by conducting operating fluid from the system outlet 28 via the second hose 44 to the mobile reservoir 48, 50. In this case, the operating fluid in the hydraulic system 14 may not be exchanged completely, but simultaneously and/or automatically filtered by the fluid filtering device 36.

In a second case, operating fluid may either be primed from the system inlet 42 for filling/topping up the hydraulic system 14 with operating fluid or operating fluid may be discarded from the hydraulic system 14 for draining operating fluid from the hydraulic system 14. The controlling means 32 may open and/or close the system inlet 24 and/or the system outlet 28 accordingly.

Preferred embodiments of the invention may be summarized as follows:
For filling, draining, and/or changing hydraulic fluid, embodiments preferably use technology on aircraft in combination with hydraulic fluid containers. These both types of already existing infrastructure are combined so that dedicated hydraulic ground equipment can be substituted.

This can be achieved with enhanced hydraulic equipment foreseen on future aircraft applications, and a technical device that interconnects the hydraulic fluid container on ground directly with the hydraulic system on the aircraft.

This device is preferably a hose with an integrated pump to push the hydraulic fluid from the container on ground to the hydraulic system pump so that it can then be sucked without the addition of air (hose priming) into the hydraulic system. A similar hose device can be taken for draining used hydraulic system fluid into a drain container. In this case, a dedicated pump would not be needed.

By using this hardware and applying the proposed operational modes, a controlled fluid filling, changing, topping up or drainage of the hydraulic system may be achieved preferably without support of a hydraulic ground cart.

The fluid filling of the hydraulic system may comprise the following steps:
- transport fluid container to aircraft;
- connect fluid container by means of a filling hose to hydraulic system at foreseen interfacing point;
- pump fluid from container to aircraft until fluid reaches hydraulic system pump (hose priming);
- take over filling action with aircraft internal hydraulic system pump (flow and pressure controlled): this may be done automatically by integrated aircraft hydraulic control means during a dedicated maintenance mode; and
- automatic air bleeding during fluid filling is foreseen by hydraulic system means (reservoir bleeding device).

The fluid changing in the hydraulic system may comprise the following steps:
- transport full and empty fluid container to aircraft;
- connect full fluid container by means of a filling hose to hydraulic system at foreseen interfacing point;
- connect empty fluid container with hose at foreseen interfacing point;
- pump fluid from container to aircraft until fluid reaches hydraulic system pump (hose priming);
- take over filling action with aircraft internal hydraulic system pump (flow and pressure controlled): this may be done automatically by integrated aircraft hydraulic control means during a dedicated maintenance mode; and
- during the filling action used fluid will be discarded automatically into an empty container.

The topping-up of the hydraulic system may comprise the following step:
- partial addition of fluid volume to achieve nominal reservoir level. Basically, the same or a similar procedure as fluid filling.

The draining of the hydraulic system may comprise the following steps:
- transport empty fluid container to aircraft;
- connect empty fluid container with hose at foreseen interfacing point;
- open interfacing point and drain fluid by gravity;
- alternatively, the internal aircraft hydraulic pump may actively support the draining.

Hydraulic system deaeration:
In case of fluid filling, fluid changing, draining, and topping up, but also for other maintenance purposes, hydraulic deaeration may be needed.

A hydraulic deaeration may be performed by using a proper hydraulic fluid flow plus opening means in the hydraulic system that are able to relieve accumulated air to ambient.

To achieve this, preferred embodiments may use the capabilities of the proposed hydraulic system (controllable flow and pressure, air relief valve, enhanced control functions) by applying a dedicated maintenance mode so that filling, fluid changing, draining, topping up and possibly deaeration after invasive maintenance can be supported automatically.

The proposed hydraulic system can be operated by setting specific pressures and flows. Additionally, by applying the proposed procedures and making use of a fluid connecting device from a fluid container to the hydraulic system, the existing ground support equipment may be substituted. The different operational modes may be performed automatically using the hydraulic system inherent data/functionality and combining logics.

### List of reference signs:

- 10: aircraft
- 12: hydraulic power unit
- 14: integrated hydraulic system
- 16: hydraulic component
- 18: unit inlet
- 20: unit reservoir
- 22: unit outlet
- 24: system inlet
- 26: system pumping device
- 28: system outlet
- 30: monitoring and/or sensing device
- 32: controlling means
- 34: system deaeration device
- 36: fluid filtering device
- 38: aircraft arrangement
- 40: hydraulic arrangement
- 42: first hose
- 44: second hose
- 46: hose pumping device
- 48: first mobile reservoir
- 50: second mobile reservoir

## Claims

1. A hydraulic system (14) for integrating in an aircraft (10) and for supplying hydraulic power to one or more hydraulic components (16) of the aircraft (10) by means of an operating fluid, the hydraulic system (14) comprising a system pumping device (26) for priming operating fluid from a system inlet (24) of the hydraulic system (14) and for pumping operating fluid thereinto.

2. The hydraulic system (14) according to claim 1, **characterized in that** the system pumping device (26) is configured for priming and pumping operating fluid at a variable pressure and/or flow rate inside the hydraulic system (14).

3. The hydraulic system (14) according to claim 2, further comprising a controlling means (32) for controlling the pressure and/or flow rate inside the hydraulic system (14) by means of the system pumping device (26) in a test mode.

4. The hydraulic system (14) according to any of the preceding claims, further comprising a system deaeration device (34) for releasing gas from inside the hydraulic system (14).

5. The hydraulic system (14) according to any of the preceding claims, further comprising a fluid filtering device (36) for filtering operating fluid inside the hydraulic system (14).

6. The hydraulic system (14) according to any of the preceding claims and configured for pumping operating fluid to a system outlet (28) of the hydraulic system (14) and for discarding operating fluid therefrom.

7. A hydraulic arrangement (40), comprising a hydraulic system (14) according to any of the preceding claims and a hose (42, 44) for conducting operating fluid and for connecting to the system inlet (24) and/or a system outlet (28) of the hydraulic system (14).

8. The hydraulic arrangement (40) according to claim 7, **characterized in that** the hose (42) includes a hose pumping device (46) for pumping operating fluid to the system pumping device (26) when the hose (42) is connected to the system inlet (24).

9. The hydraulic arrangement (40) according to claim 7 or 8, further comprising a mobile reservoir (48, 50) for operating fluid, the hose (42, 44) being configured for fluidly connecting the mobile reservoir (48, 50) with the system inlet (24) and/or a system outlet (28) of the hydraulic system (14).

10. An aircraft (10), comprising an integrated hydraulic system (14) according to any of the claims 1 to 6.

11. An aircraft arrangement (38), comprising a hydraulic arrangement (40) according to any of the claims 7 to 9 and an aircraft (10), the hydraulic system (14) of the hydraulic arrangement (40) being integrated in the aircraft (10).

12. A method for testing a hydraulic system (14) for integrating in an aircraft (10) and for supplying hydraulic power to one or more hydraulic components (16) of the aircraft (10) by means of an operating fluid, the method comprising:
a) Providing a mobile reservoir (48) containing operating fluid;
b) Fluidly connecting the mobile reservoir (48) with a system inlet (24) of the hydraulic system (14); and
c) By the hydraulic system (14), priming operating fluid from the system inlet (24) of the hydraulic system (14) and pumping operating fluid thereinto.
